# EUROPEAN PATENT APPLICATION

(11) **EP 1 029 735 A2**
(43) Date of publication of application: **23.08.2000**
(21) Application number: 00300772.1
(22) Date of filing: 01.02.2000
(51) Int. Cl.: B60N 2/28

(54) **Infant seat and pivot joint**

(30) Priority: 20.02.1999 GB 9903843; 05.07.1999 GB 9915627
(71) Applicant: Britax Excelsior Limited, Warwick CV34 6DE (GB)
(72) Inventor: Lovie, David, Andover, Hampshire SP11 9BH (GB); Powell, Ian Edward Charles, Andover, Hampshire SP10 3SZ (GB); Burleigh, David William, Bognor Regis, West Sussex PO21 4XN (GB); Quigley, Andrew D., Vetech Eng.Unit 10,Brit.Trad., Stockport, Chesire SK12 7NF (GB)
(74) Representative: Hollinghurst, Antony

(57) **Abstract**

A foldable infant safety seat comprises a base member (10), a rigid rectangular seat frame (16), a seat body (30, 32) mounted on the seat frame (16). A first link (14) has one end connected to the base member (10) by a first pivot joint (12) and its other end connected to the seat frame (16) by a second pivot joint (24). A second link (28), which is longer than the first link (14), has one end connected to the base member (10) by a third pivot joint (26) at a location spaced from that of the first pivot joint (12) and its other end connected to the seat frame (16) by a fourth pivot joint (22) at a location spaced from that of the second pivot joint (24). The first pivot joint includes a latch for inhibiting angular movement.

## Description

This invention relates both to a foldable infant seat which can be folded flat for storage and to a pivot joint having particular but not exclusive application to such a seat. Both the seat and the pivot joint of the invention has particular but not exclusive application to an infant seat for use in aircraft.

On commercial airlines, a infant under the age of two does not have an allocated seat. It is necessary for such a infant to sit on the lap of an adult during take off and landing. However, it is tedious for the adult if the infant has to remain in this position for the duration of a long flight.

It is an object of the invention to provide a seat for an infant which can be secured on a flat surface during use and which can be folded flat for stowage.

According to one aspect of the invention, a foldable infant safety seat comprises a base member, a rigid rectangular seat frame, a seat body mounted on the seat frame, a first link having one end connected to the base member by a first pivot joint and having its other end connected to the seat frame by a second pivot joint, a second link longer than the first link and having one end connected to the base member by a third pivot joint at a location spaced from that of the first pivot joint and having its other end connected to the seat frame by a fourth pivot joint at a location spaced from that of the second pivot joint, and clamping means for inhibiting angular movement of one of said pivot joints.

Preferably, the sum of the distance between the first and second pivot joints and the distance between the first and third pivot joints is equal to the sum of the distance between the second and fourth pivot joints and the distance between the third and fourth pivot joints. This enables the seat to fold completely flat.

The seat body may comprise a first rigid panel forming a seat portion, a second rigid panel forming a backrest and at least one flexible strap connecting the seat panel to the backrest panel so as to hold the rear edge of the seat panel in abutment with the bottom of the backrest panel when the seat is erected and to allow a rear part of the seat panel to overlie a lower part of the backrest panel when the seat is folded.

Preferably, the seat body includes a fabric cover having triangular panels to form seat body side walls.

According to another aspect of the invention, a latching pivot joint comprises a first pivoting member, a second pivoting member pivotally coupled to the first pivoting member for angular movement relative thereto about a pivot axis, a first detent formation on the first pivoting member arranged to engage with a first complementary formation on the second pivoting member operative when in an engaged position to hold the second pivoting member at a predetermined orientation relative to the first pivoting member, first latching means for holding the first detent formation in its engaged position, a second detent formation on the first pivoting member arranged to engage with a second complementary formation on the second pivoting member and operative when in an engaged position to limit the range of angular movement of the second pivoting member relative to the first pivoting member when the first latching means is released, and second latching means arranged to hold the second detent member in its engaged position.

Preferably the first and second pivoting members are movable relative to one another in a direction parallel to the pivot axis so as to bring the detent formations into and out of engagement with their respective complementary formations, the extent of axial movement necessary to effect disengagement of the first detent formation being less than that necessary to effect disengagement of the second detent formation.

The first and second latching means may comprise a single camming member adapted to engage with one of the pivoting members so as to cause said axial movement, the camming member being mounted for angular movement about an axis perpendicular to said pivot axis and having a radially projecting actuating lever. Preferably, the camming axis is at a fixed orientation relative to the first pivoting member such that the lever projects laterally therefrom when the second detent formation is in its disengaged position.

An embodiment of the invention will now be described, by way of example, with reference to the accompanying drawings, in which:
Figure is a perspective view of a infant seat in accordance with the invention in a fully erect position;
Figure 2 is a side view of the frame of the seat shown in Figure 1 with the fabric cover removed;
Figure 3 is a perspective view, similar to Figure 1, but with the seat in its fully folded position;
Figure 4 is a side view, similar to Figure 2, but with the seat frame the position shown in Figure 3;
Figure 5 is a perspective view, similar to Figures 1 and 3 but showing the seat in an erect but fully reclined position;
Figure 6 is a perspective view showing the seat of Figures 1-5 mounted on an aircraft bulkhead table;
Figures 7 and 8 are exploded perspective views, from different angles, of a locking pivot joint suitable for use as part of the seat shown in Figures 1 to 6;
Figure 9 is an axial plan view of the joint shown in Figures 7 and 8, with both latches engaged;
Figure 10 is a cross-sectional view taken on the line 10-10 in Figure 9;
Figure 11 is a cross-sectional view, similar to Figure 10, but with the first latch released and the second latch engaged; and
Figure 12 is a cross-sectional view, similar to Figures 10 and 11, but showing both latches released.

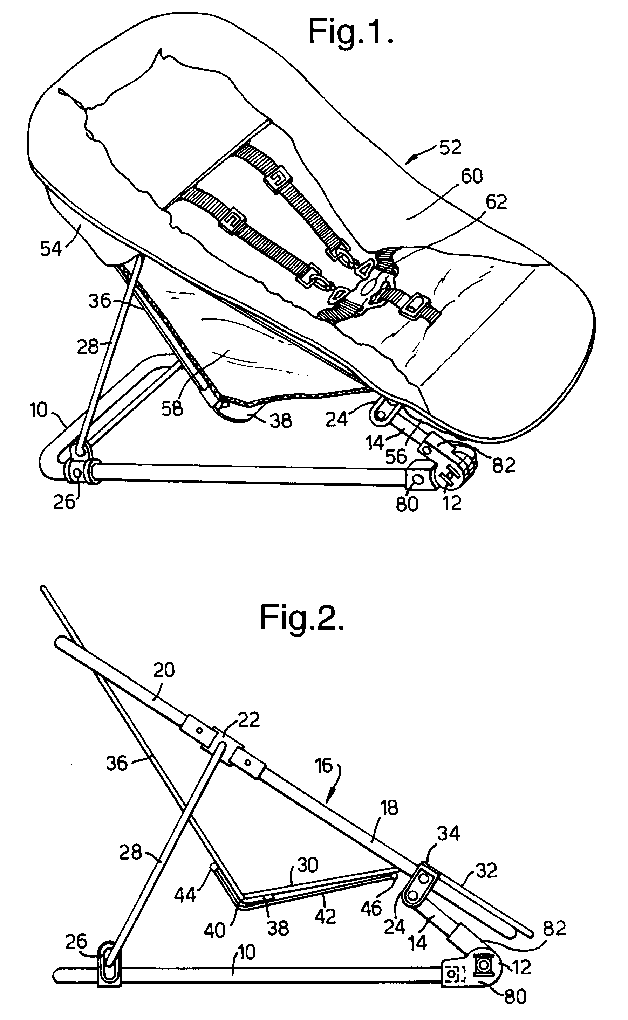

Referring to Figures 1 and 2, an infant safety seat has U-shaped base frame 10 having a respective first pivot joint 12 mounted on the end of each limb. Each pivot joint 12 is connected to one end of a respective short strut 14 and takes the form of a latching pivot joint which can be secured in a desired orientation, as will be described in more detail below.

A seat frame 16 is formed from U-shaped lower and upper seat frame members 18 and 20 having the ends of their limbs connected to one another by respective coupling members 22. A respective second pivot joint 24 connects each limb of the upper seat frame member 18 to the free end of the corresponding strut 14. A respective third pivot joint 26 on each limb of the base frame 10 has the central part of a U-shaped strut 28 journalled therein. The ends of the limbs of the U-shaped strut 28 are pivotally connected to respective coupling members 22 of the seat frame 16.

A seat panel formed from extruded polypropylene sheet, of the type sold under the trade mark CORREX, has a seat portion 30 and a leg portion 32 interconnected by an integral hinge 34. The leg portion 32 is connected to the lower portion of the lower seat frame member 18. A backrest panel 36 in the form of an extruded polypropylene sheet is pivotally secured to the upper seat frame member 20 and has an integrally formed support lip 38 connected to its bottom edge by an integral hinge 40. A webbing strap 42 extends from an attachment point 44 on the back of the backrest panel 36 to a second attachment point 46 on the bottom of the seat portion 30.

As can be seen in Figure 1, the panels 30 and 36 are enclosed in a fabric cover 52 having an upper pocket 54 which encloses the upper end of the upper seat frame member 20. A similar pocket 56 surrounds the leg rest 32 and the corresponding part of the lower seat frame member 18. The cover 52 also has triangular fabric panels 58 and 60 which form side walls for the seat body. The straps of a child's five point harness 62 project through slots in the cover 52 and have their ends (not shown) secured to the panels 30 and 36.

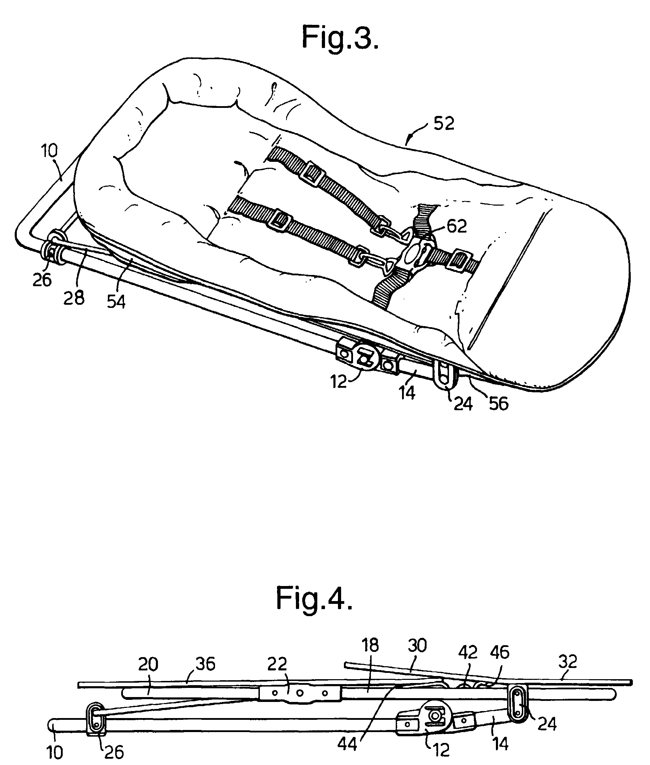

When it is desired to fold the seat, the latching joints 12 are released and the struts 14 pivoted forwardly to a position in line with the limbs of the U-shaped base member 10, as shown in Figures 3 and 4. The frame members 18 and 20 then lie parallel to the base member 10. The webbing strap 42 slackens and the seat portion 30 overlaps the seat portion 30. The seat thus forms a compact package which can easily be stowed when not in use, particularly when the aircraft is taking off or landing.

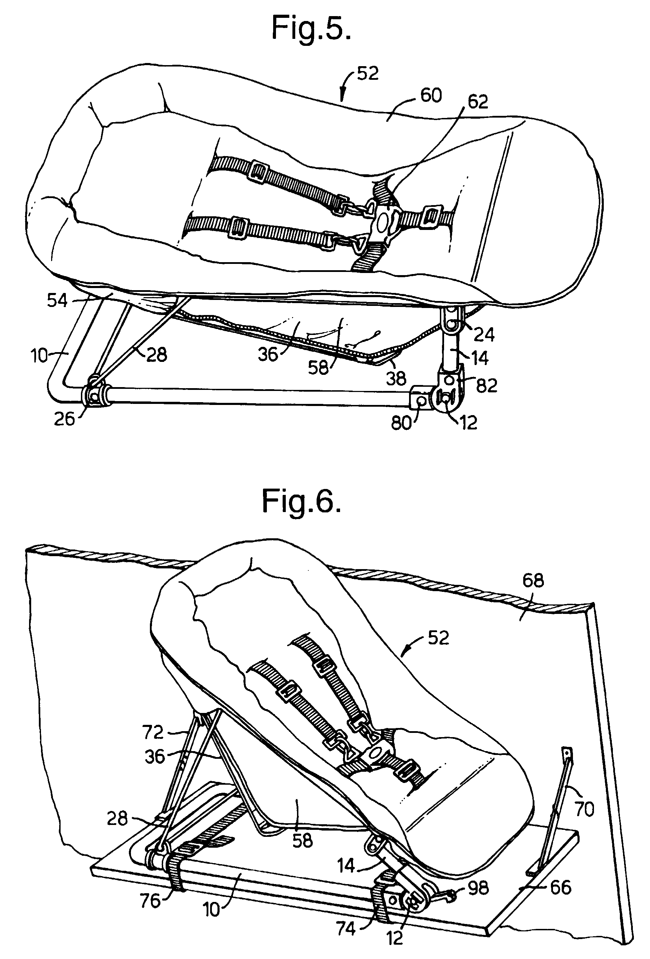

Figure 5 shows the seat body in a fully reclined position suitable for use by a sleeping infant. The seat can also be positioned for use in intermediate positions between the position shown in Figure 1 and the position shown in Figure 5.

Referring to Figure 6, a table comprising a panel 66 is mounted on a bulkhead 68 in an aircraft cabin by means of hinges (not shown) and supported in a horizontal orientation by stays 70 and 72. The infant safety seat shown in Figures 1 to 5 can be located on the table 66 with its resting and secured in place by straps 74 and 76 which extend round the panel 66 and the base member 10. When the safety seat has been removed, the panel 66 can be pivoted upwardly to a vertical orientation in which it is stowed in abutment with the bulkhead 68.

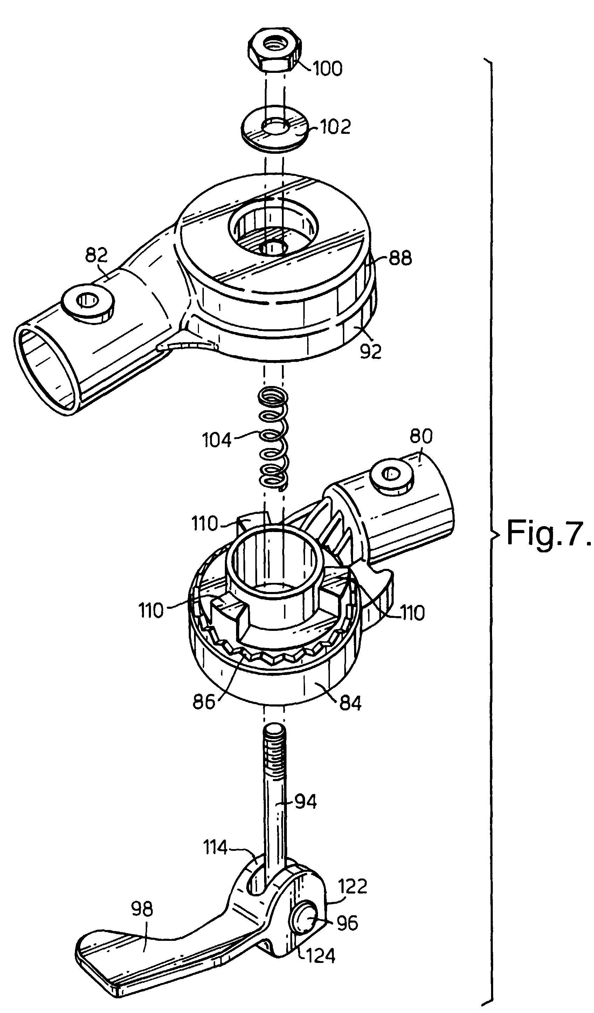

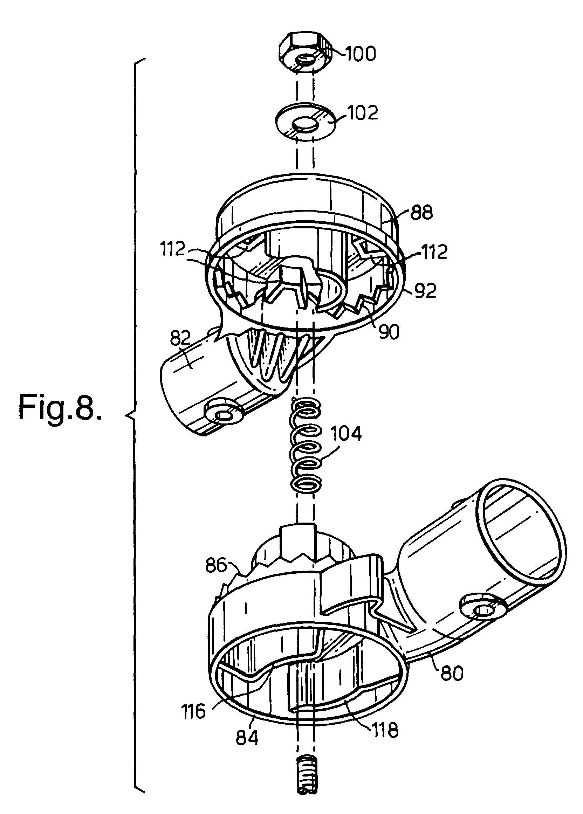

Referring to Figures 7, 8 and 9, each knuckle joint 12 comprises a first pivoting member 80 attached to the ends of respective limbs of the base frame 10, and second pivoting members 82, each of which is attached to a respective strut 14. As can best be seen from Figures 7 and 8, the first pivoting member 80 has a hollow cylindrical body 84 with an annular series of triangular teeth 86 on one end. The second pivoting member 82 also has a hollow cylindrical body 88 with a complementary annular series of triangular teeth 90 arranged to be engageable with the teeth 86 on the first pivoting member. The body 88 of the second pivoting member also has a cylindrical skirt 92 projecting beyond the teeth 90 and having an internal diameter such that it is a clear sliding fit on the cylindrical exterior of the body 84 of the first pivoting member 80.

A bolt 94 extends through central holes in the pivoting members 80 and 82 so as to serve as a pivot axis. One end of the bolt 94 has a T-shaped head 96 having a clamping lever 98 pivotally mounted thereon, the function of which will be described hereinafter. The other end of the bolt 94 is threaded to receive a nut 100. A washer 102 engages between the nut 100 and the second pivoting member 82. A compression spring 104 is mounted on the bolt 94 and engages between the two pivoting members 80 and 82 so as to urge them apart.

As can be seen in Figure 7, the first pivoting member 80 has three dogs 110 located radially inwardly of the teeth 86 uniformly spaced apart from one another. As can be seen in Figure 8, the second pivoting member 82 has three complementary dogs 112 located radially inwardly of the teeth 90 thereon. The circumferential extent of the dogs 110 and 112 is such that, when overlapping, they limit the range of relative angular movement between the two pivoting members 80 and 82 to an angle equal to the extent of angular movement of the strut 14 between its position shown in Figure 2 and its position shown in Figure 5. The axial extent of the dogs 110 and 112 is such that they remain overlapping after the two pivoting members 80 and 82 have moved apart just sufficiently for the teeth 86 to disengage from the teeth 90.

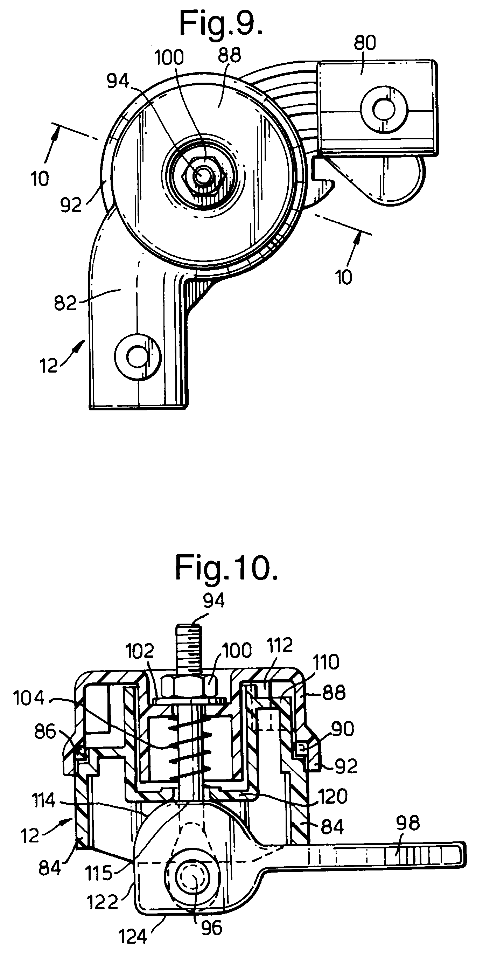

The clamping lever 98 has a semi-cylindrical camming surface 114 with a central flat portion 115 arranged to be received between guide flanges 116 and 118 which extend across the interior of the cylindrical body 84 of the first pivoting member 80 (Figure 8). The flat portion 115 of the camming surface 114 engages with a transverse wall 120 of the pivoting member 80 which extends radially inwardly from the dogs 110, as shown in Figure 10. In this position, the teeth 86 of the first pivoting member 80 are held in engagement with the teeth 90 on the second pivoting member 82 so as to prevent relative angular movement between them. The struts 14 (Figures 1 to 6) are therefore locked at a fixed orientation relative to the base frame 10.

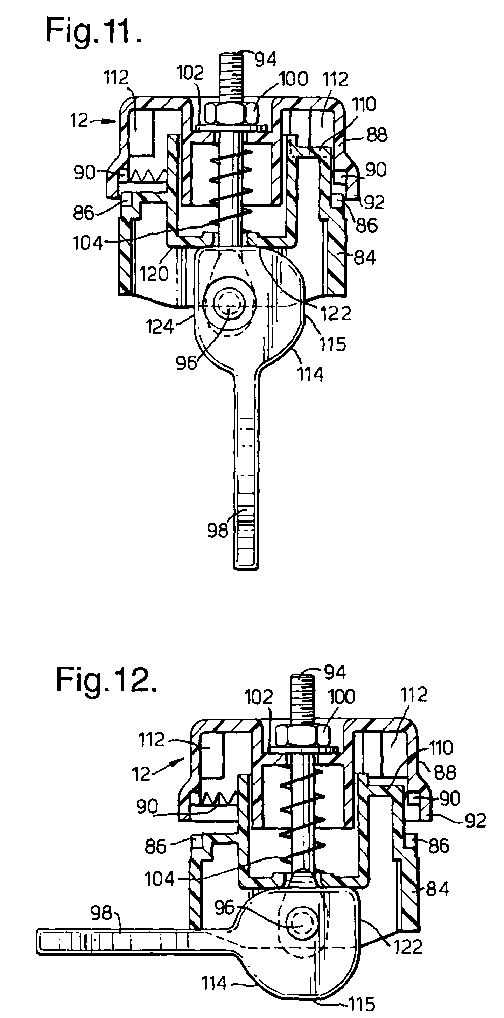

If the lever 98 is pivoted through 90° to the position shown in Figure 11, a flat tangential extension 122 of the camming surface 114 comes into abutment with the wall 120. This allows the compression spring 104 to push the two pivoting members 80 and 82 apart so that the teeth 86 and 90 disengage from one another. The flat camming surface 122 restricts the two pivoting members 80 and 82 from moving apart sufficiently for the dogs 110 and 112 to cease overlapping one another, with the result that the struts 14 are free to pivot between the position shown in Figure 1 and the position shown in Figure 5 but not beyond this range of movement.

The lever 98 has a further flat cam surface 124 at right angles to the surface 122. If the lever 98 is pivoted through a further 90° to the position shown in Figure 12, the compression spring 104 moves the two pivoting members 80 and 82 further apart so that the dogs 110 are clear of the dogs 112. The struts 14 are now free to pivot beyond the previously described range to the fully folded position shown in Figures 3 and 4.

The ribs 116 are oriented so that when the lever 98 is in its fully locked position shown in Figure 10, it projects upwardly relative to the top surface of the panel 66. Consequently, when the seat is secured in place by the straps 74 and 76, the lever 98 can be pivoted as far as the position shown in Figure 11 in which it projects laterally inwardly towards the other side of the seat. Further pivoting movement towards the position shown in Figure 12 is prevented by abutment with the panel 66. Consequently, when the seat is strapped in place on the panel 66, it can be adjusted between its most upright position as shown in Figures 1 and 2 to its fully reclined position shown in Figure 5 but cannot be moved to its fully folded position as shown in Figure 3 and 4.

## Claims

1. A foldable infant safety seat comprises a base member (10), a rigid rectangular seat frame (16), a seat body (30, 32) mounted on the seat frame (16), characterised by a first link (14) having one end connected to the base member (10) by a first pivot joint (12) and having its other end connected to the seat frame (16) by a second pivot joint (24), a second link (28) longer than the first link (14) and having one end connected to the base member (10) by a third pivot joint (26) at a location spaced from that of the first pivot joint (12) and having its other end connected to the seat frame (16) by a fourth pivot joint (22) at a location spaced from that of the second pivot joint (24), and latching means for inhibiting angular movement of one of said pivot joints (12, 22, 24, 26).

2. An infant seat according to claim 1, wherein the sum of the distance between the first and second pivot joints (12, 24) and the distance between the first and third pivot joints (12, 26) is substantially equal to the sum of the distance between the second and fourth pivot joints (24, 22) and the distance between the third and fourth pivot joints (26, 22).

3. An infant seat according to claim 1, wherein the seat body comprises a first rigid panel (30) forming a seat portion, a second rigid panel (32) forming a backrest and a flexible strap (42) connecting the seat panel (30) to the backrest panel (32) so as to hold the rear edge of the seat panel (30) in abutment with the bottom of the backrest panel (32) when the seat is erected and to allow a rear part of the seat panel (30) to overlie a lower part of the backrest panel (32) when the seat is folded.

4. An infant seat according to claim 1, wherein the seat body (30, 32) includes a fabric cover (52) having triangular panels (58, 60) to form seat body side walls.

5. An infant seat according to any preceding claim, wherein the latching means comprises a latching pivot joint (12) having a first pivoting member (80), a second pivoting member (82) pivotally coupled to the first pivoting member (80) for angular movement relative thereto about a pivot axis (94), a first detent formation (86) on the first pivoting member (80) arranged to engage with a first complementary formation (90) on the second pivoting member (82) operative when in an engaged position to hold the second pivoting member (82) at a predetermined orientation relative to the first pivoting member (80), first latching means (98) for holding the first detent formation (86) in its engaged position, a second detent formation (110) on the first pivoting member (80) arranged to engage with a second complementary formation (112) on the second pivoting member (82) and operative when in an engaged position to limit the range of angular movement of the second pivoting member (82) relative to the first pivoting member (80) when the first latching means is released, and second latching means (98) arranged to hold the second detent member in its engaged position.

6. An infant seat according to claim 5, wherein the second latching means includes a formation (98) adapted to project laterally from the opposite side of the base member (10) to the seat frame (16) when the second detent formation (110) is in its disengaged position.

7. An infant seat according to claim 6, wherein the first and second pivoting members (80, 82) are movable relative to one another in a direction parallel to the pivot axis (94) so as to bring the detent formations (86, 110) into and out of engagement with their respective complementary formations, the extent of axial movement necessary to effect disengagement of the first detent formation (86) being less than that necessary to effect disengagement of the second detent formation (110).

8. An infant seat according to claim 5, 6 or 7, wherein the first and second latching means comprise a single camming member (114, 122) adapted to engage with one of the pivoting members (80) so as to cause said axial movement, the camming member (114, 122) being mounted for angular movement about a camming axis (94) perpendicular to said pivot axis (94) and having a radially projecting actuating lever (98).

9. An infant seat according to claim 8, wherein the camming axis is at a fixed orientation relative to the first pivoting member (80) such that the actuating lever (98) projects laterally from the opposite side of the base member (10) to the seat frame (16) when the second detent formation (110) is in its disengaged position.

10. A latching pivot joint (12) comprising a first pivoting member (80), a second pivoting member (82) pivotally coupled to the first pivoting member (80) for angular movement relative thereto about a pivot axis (94), a first detent formation (86) on the first pivoting member (80) arranged to engage with a first complementary formation (90) on the second pivoting member (82) operative when in an engaged position to hold the second pivoting member (82) at a predetermined orientation relative to the first pivoting member (80), first latching means (98) for holding the first detent formation (86) in its engaged position, a second detent formation (110) on the first pivoting member (80) arranged to engage with a second complementary formation (112) on the second pivoting member (82) and operative when in an engaged position to limit the range of angular movement of the second pivoting member (82) relative to the first pivoting member (80) when the first latching means is released, and second latching means (98) arranged to hold the second detent member in its engaged position.

11. A latching pivot joint according to claim 10, wherein the first and second pivoting members (80, 82) are movable relative to one another in a direction parallel to the pivot axis (94) so as to bring the detent formations (86, 110) into and out of engagement with their respective complementary formations, the extent of axial movement necessary to effect disengagement of the first detent formation (86) being less than that necessary to effect disengagement of the second detent formation (110).

12. A latching pivot joint according to claim 10 or 11, wherein the first and second latching means comprise a single camming member (98) adapted to engage with one of the pivoting members (80) so as to cause said axial movement, the camming member (98) being mounted for angular movement about an axis (94) perpendicular to said pivot axis (94) and having a radially projecting actuating lever (98).

13. A latching pivot joint according to claim 12, wherein the camming axis is at a fixed orientation relative to the first pivoting member (80) such that the actuating lever (98) projects laterally from the first pivoting member (80) when the second detent formation (110) is in its disengaged position.
